# EUROPÄISCHE PATENTANMELDUNG

(11) **EP 2 886 229 A1**
(43) Veröffentlichungstag der Anmeldung: **24.06.2015**
(21) Anmeldenummer: 13197934.6
(22) Anmeldetag: 18.12.2013
(51) Int. Cl.: B23B 49/00, B23B 51/02

(54) **Bohrer mit Tiefenmarkierer**

(71) Anmelder: HILTI Aktiengesellschaft, 9494 Schaan (LI)
(72) Erfinder: Kleine, Werner, 28832 Achim (DE); Grasberger, Stefan, 6800 Feldkirch (AT)
(74) Vertreter: Hilti Aktiengesellschaft Corporate Intellectual Property

(57) **Zusammenfassung**

Der Bohrer hat einen Tiefenmarkierer, der ohne Werkzeug auf dem Bohrer positioniert werden kann. Der Bohrer hat längs einer Bohrerachse angeordnet einen Bohrkopf zum Bearbeiten eines Werkstücks, einen Schaft zum Abtransport von Bohrgut und ein Einsteckende zum Einsetzen in eine Werkzeugmaschine. Der Schaft ist in einer, vorzugsweise mehreren ringförmigen Einschnürung versehen, die in Ebenen senkrecht zur Arbeitsachse liegen. Ein Tiefenmarkierer hat einen elastischen Ring, dessen Innendurchmesser geringer als der Außendurchmesser des Schafts außerhalb der Einschnürungen ist, und eine an dem elastischen Ring außen anliegend, den elastischen Ring umschließende Hülse aus einem nicht-elastischen Material.

## Beschreibung

### GEBIET DER ERFINDUNG

Die vorliegende Erfindung betrifft einen auf einem Bohrer befestigbaren Tiefenmarkierer.

CH 265595 A lehrt einen Ring, der auf die Wendel des Bohrers aufgeschoben wird. Eine radial orientierte Schraube klemmt den Ring an der Wendel an. Die Befestigung des Rings erfordert ein Werkzeug.

### OFFENBARUNG DER ERFINDUNG

Der erfindungsgemäße Bohrer hat einen Tiefenmarkierer, der ohne Werkzeug auf dem Bohrer positioniert werden kann. Der Bohrer hat längs einer Bohrerachse angeordnet einen Bohrkopf zum Bearbeiten eines Werkstücks, einen Schaft zum Abtransport von Bohrgut und ein Einsteckende zum Einsetzen in eine Werkzeugmaschine. Der Schaft ist mit einer, vorzugsweise mehreren, ringförmigen Einschnürung versehen, die in Ebenen senkrecht zur Arbeitsachse liegen. Ein Tiefenmarkierer hat einen elastischen Ring, dessen Innendurchmesser geringer als der Außendurchmesser des Schafts außerhalb der Einschnürungen ist, und eine an dem elastischen Ring außen anliegend, den elastischen Ring umschließende Hülse aus einem nicht-elastischen Material. Der Schaft kann eine Wendel aufweisen oder hohl mit einer äußeren glatten zylindrischen Wand sein.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Bohrer mit Tiefenmarkierer
Fig. 2 Längsschnitt durch den Tiefenmarkierer

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

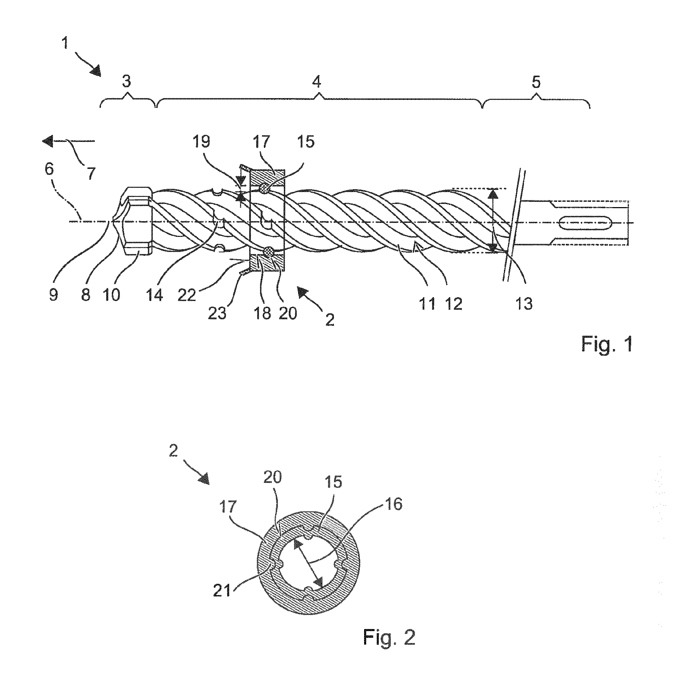

Fig. 1 zeigt einen beispielhaften Bohrer **1** mit einem aufgesetzten Tiefenmarkierer **2.** Der Bohrer **1** hat einen Bohrkopf **3,** einen Schaft **4** und ein Einsteckende **5,** welche nacheinander und koaxial zu einer Bohrerachse **6** angeordnet sind.

Der Bohrkopf **3** ist vorzugsweise für den Abbau von Naturstein oder Beton vorgesehen. Der Bohrkopf **3** hat zwei oder mehr in Arbeitsrichtung **7** weisende Meißelkanten **8,** die zu einer Spitze **9** zusammenlaufen. Der Bohrkopf **3** hat ferner zu der Bohrerachse **6** parallele Abbruchkanten **10,** welche radial über den Schaft **4** hinausstehen. Vorzugsweise gehen die Meißelkanten **8** und die Abbruchkanten **10** ineinander über. Der beispielhafte Bohrkopf **3** ist monolithisch aus gesintertem Hartmetall gebildet, d.h. die Meißelkanten **8** und Abbruchkanten **10** sind ohne Fügezonen miteinander verbunden.

Der beispielhafte wendelförmige Schaft **4** hat vier Wendelstege **11** und vier Wendelgänge **12.** Der Außendurchmesser **13** des Schafts **4** ist durch die Wendelstege **11** bzw. den Rotationskörper des sich um die Bohrerachse **6** drehenden Bohrers **1** definiert. Der Außendurchmesser **13** ist längs der Bohrerachse **6** weitgehend gleich. Der Schaft **4** hat beispielhaft drei Einschnürungen **14,** welche längs der Bohrerachse **6** parallel zueinander versetzt angeordnet sind. Die Einschnürungen **14** liegen in entsprechend parallelen Ebenen, die senkrecht auf der Bohrerachse **6** stehen. Die Einschnürung **14** bilden Kerben in den Wendelstegen **11.** Die Kerben haben eine im Wesentlichen teilzylindrische Form, deren Tiefe vorzugsweise geringer als deren Krümmungsradius ist. Die Einschnürung **14** verringert lokal den Außendurchmesser **13** des Schafts **4** um etwa 1,0 mm bis 2,0 mm. Die Abmessung der Einschnürungen **14** längs der Bohrerachse **6** ist im Bereich von 1,0 mm bis 2,0 mm. Außerhalb der Einschnürungen **14** ist der Außendurchmesser **13** vorzugsweise konstant.

Der Tiefenmarkierer **2** hat einen elastischen Ring **15.** Der elastische Ring **15** ist vorzugsweise aus synthetischem oder natürlichem Gummi. Ein Innendurchmesser **16** des Rings **15** ist geringer als der mittlere Außendurchmesser **13** des Schafts **4.** Der Tiefenmarkierer **2** kann mit geringerem Kraftaufwand entlang des Schafts **4** verschoben werden. Der Innendurchmesser **16** des Rings **15** ist vorzugsweise etwas geringer als der Außendurchmesser **13** im Bereich der Einschnürungen **14.** Der Ring **15** liegt somit mit leichter Vorspannung in der Einschnürung **14.** Die Schnurstärke des Rings **15** liegt vorzugsweise im Bereich zwischen 1,0 mm und 2,0 mm.

Der Tiefenmarkierer **2** hat eine Hülse **17,** in die der elastische Ring **15** eingesetzt ist. Die Hülse **17** ist vorzugsweise aus einem steifen Kunststoff oder aus Blech. Die Hülse **17** umschließt den elastischen Ring **15** radial nach außen. Der Ring **15** stützt sich in radialer Richtung an der Hülse **17** ab. Auf der radialen Außenfläche der Hülse **17** kann der Bohrerdurchmesser angegeben sein, für welche die Hülse **17** vorgesehen ist. Der Anwender kann somit an der Hülse **17** ablesen, welchen Bohrer **1** er gerade verwendet.

Der Ring **15** kann in der Hülse **17** verkippt angeordnet sein, d.h. eine Achse des Rings **15** und eine Achse der Hülse **17** sind nicht koaxial sondern schließen eine Winkel, von z.B. 2 Grad bis 10 Grad zueinander ein. Der Tiefenmarkierer **2** neigt zum Verkanten mit dem Bohrer **1.** Die Hülse **17** hat versetzt zu dem Ring **15** eine ringförmige Fläche **18,** die nur in geringem Abstand **19** zu dem Schaft **4** ist. Der Abstand **19** ist vorzugsweise geringer als 0,5 mm.

Die radiale an dem Ring **15** anliegende Fläche **20** der Hülse **17** kann mit radialen Vorsprüngen **21** versehen sein. Die Vorsprünge **21** sind mit der gleichen Symmetrie wie die Wendelstege **11** angeordnet. Der Anwender kann den Tiefenmarkierer **2** auf den Schaft **4** entlang der Wendelgänge **12** aufschrauben, wobei die Vorsprünge in den Wendelgängen geführt sind. Auf Höhe der Einschnürungen **14** wird die Hülse **17** so gedreht, dass die Vorsprünge **21** in den Kerben liegen. Der Ring **15** wird zusätzlich zum Erhöhen seiner Klemmkraft durch die Vorsprünge **21** gequetscht.

An der Vorderseite **22** der Hülse **17** sind ein oder mehrere Pinsel **23** angeordnet, die in Richtung Bohrkopf **3** weisen. Die Pinsel **23** sind beispielsweise längliche Noppen aus Gummi oder anderem elastischen Kunststoff. Beim Bohren in den Boden sammelt sich das Bohrgut als kleiner Hügel um das Bohrloch. Die Pinsel **23** schleudern teilweise das Bohrgut beim Erreichen des Bodens weg, und erleichtern die Sicht auf das Bohrloch. Der Anwender kann erkennen, ob der Tiefenmarkierer **2** den Boden erreicht hat.

## Patentansprüche

1. Bohrer (1) mit Tiefenmarkierer (2), wobei der Bohrer (1) längs einer Bohrerachse (6) angeordnet einen Bohrkopf (3) zum Bearbeiten eines Werkstücks, einen Schaft (4) zum Abtransport von Bohrgut und ein Einsteckende (5) zum Einsetzen in eine Werkzeugmaschine aufweist,
der Schaft (4) mit einer oder mehreren ringförmigen Einschnürungen (14) versehen ist, die in Ebenen senkrecht zur Bohrerachse (6) liegen,
der Tiefenmarkierer (2) einen elastischen Ring aufweist, dessen Innendurchmesser (16) geringer als der Außendurchmesser (13) des Schafts (4) außerhalb der Einschnürungen (14) ist, und eine an dem elastischen Ring (15) außen anliegend, den elastischen Ring (15) umschließende Hülse (17) aus einem nicht-elastischen Material aufweist.

2. Bohrer mit Tiefenmarkierer nach Anspruch 1, **dadurch gekennzeichnet, dass** ein Außendurchmesser im Bereich der Einschnürungen (14) zwischen 1,0 mm und 2,0 mm geringer als der mittlere Außendurchmesser (13) des Schafts (4) ist.

3. Bohrer mit Tiefenmarkierer nach Anspruch 1 oder 2, **dadurch gekennzeichnet, dass** eine Abmessung längs der Bohrerachse der Einschnürungen (14) geringer als 2,0 mm ist.

4. Bohrer mit Tiefenmarkierer nach einem der vorhergehenden Ansprüche, **dadurch gekennzeichnet, dass** die Einschnürungen (14) kreisförmig sind.

5. Bohrer mit Tiefenmarkierer nach einem der vorhergehenden Ansprüche, **dadurch gekennzeichnet, dass** eine Achse des elastischen Rings (15) und eine Achse der Hülse (17) um wenigstens 2 Grad zueinander geneigt sind.

6. Bohrer nach Anspruch 5, **dadurch gekennzeichnet, dass** ein längs der Achse zu dem elastischen Ring versetzter Abschnitt des Tiefenmarkierers einen Innendurchmesser (16) aufweist, der um maximal 1 mm größer als der Außendurchmesser (13) des Schafts (4) ist.

7. Bohrer mit Tiefenmarkierer nach einem der vorhergehenden Ansprüche, **dadurch gekennzeichnet, dass** ein in Richtung zu dem Bohrkopf (3) weisender Pinsel (23) an der Hülse (17) vorgesehen ist.

8. Bohrer (1) nach einem der vorhergehenden Ansprüche, **dadurch gekennzeichnet, dass** der Ring aus Gummi und die Hülse aus Kunststoff ist.

9. Bohrer (1) nach einem der vorhergehenden Ansprüche, dass eine in radialer Richtung an dem Ring (15) anliegende Fläche (20) der Hülse (17) radial nach Innen weisende Vorsprünge (21) aufweist.

10. Bohrer (1) nach einem der vorhergehenden Ansprüche, **dadurch gekennzeichnet, dass** die Hülse (17) auf einer Außenfläche der Hülse (17) ein Durchmesser des Bohrers (1) angegeben ist.
